# EUROPÄISCHE PATENTSCHRIFT

(11) **EP 2 842 878 B1**
(45) Veröffentlichungstag und Bekanntmachung des Hinweises auf die Patenterteilung: **07.03.2018**
(21) Anmeldenummer: 14182623.0
(22) Anmeldetag: 28.08.2014
(51) Int. Cl.: B65C 9/06, B65G 47/244, B65G 47/84

(54) **Vorrichtung und Verfahren zum Transport von Behältern in einer Getränkeabfüllanlage**
Device and method for transporting containers in a beverage dispensing machine
Dispositif et procédé de transport de récipients dans une installation de remplissage de boissons

(30) Priorität: 29.08.2013 DE 102013109384
(43) Veröffentlichungstag der Anmeldung: 04.03.2015
(73) Patentinhaber: Krones AG, 93073 Neutraubling (DE)
(72) Erfinder: Landler, Bruno, 93073 Neutraubling (DE); Kolbinger, Fabian, 93073 Neutraubling (DE); Schoenfelder, Markus, 93073 Neutraubling (DE); Gloetzl, Reiner, 93073 Neutraubling (DE); Baumgartner, Sebastian, 93073 Neutraubling (DE)
(74) Vertreter: Nordmeyer, Philipp Werner

(56) Entgegenhaltungen:
- DE-A1-102011 083 377
- FR-A1- 2 342 207
- FR-A1- 2 436 725
- GB-A- 2 077 684
- US-A- 5 701 990
- US-A1- 2003 155 320
- US-A1- 2007 289 840

## Beschreibung

### Technisches Gebiet

Die vorliegende Erfindung betrifft eine Vorrichtung sowie ein Verfahren zum Transport von Behältern in einer Getränkeabfüllanlage, bevorzugt zum Transport von nicht-rotationssymmetrisch ausgebildeten Behältern.

### Stand der Technik

Beim Transport von Behältern in Getränkeabfüllanlagen und insbesondere beim Transport von nicht-rotationssymmetrisch ausgebildeten Behältern in Getränkeabfüllanlagen kann es notwendig sein, die Behälter in der Getränkeabfüllanlage bezüglich ihrer jeweiligen Rotationsorientierung um die Behälterachse herum in eine vorgegebene Ausrichtung auszurichten. Unter Behälterachse wird die Achse verstanden, welche sich bei aufrecht stehendem Behälter von oben nach unten durch die Mündung hindurch und rotationssymmetrisch zu dieser erstreckt.

Die Ausrichtung eines nicht-rotationssymmetrisch ausgebildeten Behälters in einer Getränkeabfüllanlage kann beispielsweise notwendig sein, um nachfolgende Bearbeitungsschritte in einer vorgegebenen Ausrichtung des Behälters vorzunehmen. Beispielsweise kann bei Behältern, welche in das Behältermaterial eingeprägte Strukturen wie beispielsweise Logos, Embleme oder Schriften aufweisen, oder welche einen nicht-rotationssymmetrischen Querschnitt senkrecht zur Behälterachse aufweisen, eine vorgegebene Ausrichtung notwendig sein, um nachfolgend beispielsweise ein Etikett in der vorgegebenen Ausrichtung aufbringen zu können. Beispielsweise soll ein Etikett in einem vorbestimmten Abstand bezüglich eines Emblems aufgebracht werden, oder das Etikett soll auf einer Seitenfläche des Behälters so aufgebracht werden, dass eine Ecke des Behälterkörpers nicht mit dem Etikett überdeckt wird.

Bei nicht-rotationssymmetrisch ausgebildeten Behältern, beispielsweise bei im Querschnitt rechteckigen oder schematischen Behältern, kann es weiterhin notwendig sein, die Behälter an unterschiedlichen Positionen entlang der Transportbahn der Getränkeabfüllanlage so auszurichten, dass sie in bestimme Führungsvorrichtungen eingeführt werden können beziehungsweise mit Führungsvorrichtungen in Kontakt treten können. Behälter werden in rotierenden Transportvorrichtungen häufig entlang Kreisabschnittsbahnen, beispielsweise mit Transportsternen, transportiert. Weiterhin ist es üblich, Behälter in Getränkeabfüllanlagen an ihrem Halsbereich zu führen, insbesondere bei der Abfüllung von Getränken in Plastikbehälter. Bei einer kreisabschnittsförmigen Transportbahn, beispielsweise durch Transport mittels eines Transportsternes, entstehen Zentrifugalkräfte, welche von einer Halsführung alleine nur schwer abstützbar sind. Entsprechend werden die Behälter üblicherweise nicht nur an ihrem Halsbereich geführt, sondern werden auch im Bereich des Behälterkörpers mittels so genannter Führungsgarnituren, welche am Außenumfang der jeweiligen Transportbahn angeordnet sind, geführt. Bei nicht-rotationssymmetrischen Behältern ist es daher notwendig, die Behälter so auszurichten, dass sie zuverlässig an diesen Führungsgarnituren entlang geführt werden und nicht, beispielsweise durch eine Fehlorientierung, von diesen Führungsgarnituren beabstandet sind. Im Beispielsfalle eines einen schematischen Querschnitt aufweisenden Behälters kann bei einer Orientierung des Behälters derart, dass eine Seitenfläche im Wesentlichen tangential zur Führungsgarnitur geführt ist, ein Abstand zwischen der Behälteraußenwand und der Führungsgarnitur auftreten. Durch diesen Abstand kann aufgrund der Fliehkräfte der Behälter während des Transportes in der Halsführung verrutschen und so weit verkippt werden, bis die Außenfläche aufgrund der Zentrifugalkraft an der Führungsgarnitur anliegt. Durch das Anstoßen der Außenfläche an der Führungsgarnitur kann weiterhin auch das sich bereits in dem Behälter befindliche Füllprodukt aus dem Behälter herausspritzen. Am Mündungsbereich auszuführende Bearbeitungsschritte, so wie beispielsweise das korrekte Aufsetzen eines Füllorganes oder das Aufschrauben eines Behälterverschlusses, gestalten sich dann schwierig. Insbesondere beim Aufschrauben eines Behälterverschlusses kann es bei einem verkippten Behälter und einer entsprechend verkippten Behälterachse zu einem nicht korrekten Verschließen des Behälters kommen, so dass hierdurch ein Ausschussbehälter produziert wird.

Entsprechend ist im Beispielsfall eine vorgegebene Ausrichtung der Behälter derart, dass die jeweilige Führungsgarnitur voll an einem Bereich der Behälteraußenwand anliegt, vonnöten. Beispielsweise kann der Behälter so ausgerichtet werden, dass in einem Eckenbereich des im Wesentlichen schematischen Querschnitt aufweisenden Behälters ein Kontakt zur Führungsgarnitur hergestellt wird. Dadurch wird dann das vorgenannte Verkippen vermieden.

Aus der DE 20 2005 014 456 U1 ist eine Vorrichtung zum Ausrichten von Behältern bekannt, bei welcher die Behälter auf Drehtellern angeordnet werden und jedem Drehteller ein eigener elektrischer Servomotor zur Ausrichtung des auf dem jeweiligen Drehteller angeordneten Behälters zugeordnet ist. Hieraus ergibt sich eine aufwändige Anordnung, da für jeden Drehteller ein eigener Antrieb notwendig ist, und sich die Antriebe im rotierenden Teil der Vorrichtung befinden.

Aus der EP 1 493 694 A2 ist eine Vorrichtung mit einem bürstenförmigen Reibrad und einer trichterförmigen Führung bekannt, mittels welcher nicht-rotationssymmetrische Behälter definiert ausgerichtet werden können.

Aus der DE 297 19 038 U1 ist eine Vorrichtung zum kurzzeitigen Drehen von entlang einer Transportbahn geführten rotationssymmetrischen Gegenständen bekannt, bei welcher mittels zweier Reibräder eine Rotation der Behälter zur Durchführung einer Inspektion vorgenommen werden kann.

Die FR 2 436 725 A1, GB 2 077 684 A, US 2007/0289840 A1 und FR 2 342 207 A beschreiben Vorrichtungen zur Ausrichtung von Flaschen. FR 2 342 207 A offenbart den Oberbegriff der Ansprüche 1 und 10.

### Darstellung der Erfindung

Ausgehend vom genannten Stand der Technik ist es eine Aufgabe der vorliegenden Erfindung, eine Vorrichtung zum Transport von Behältern in einer Getränkeabfüllanlage anzugeben, mittels welcher eine Ausrichtung von Behältern effizient und zuverlässig erreicht werden kann.

Entsprechend wird eine Vorrichtung nach Anspruch 1 zum Transport von Behältern in einer Getränkeabfüllanlage, vorgeschlagen. Erfindungsgemäß ist die Reibvorrichtung zur gesteuerten Ausrichtung jedes Behälters ausgebildet. Die Fördervorrichtung ist ein Transportstern, der die Behälter an der Reibvorrichtung vorbeiführt. Die Vorrichtung umfasst weiterhin eine Drehausrichtungserfassung zur Erfassung der Rotationsausrichtung jedes Behälters, wobei die Reibvorrichtung so mit der Drehausrichtungserfassung kommuniziert, dass jeder Behälter auf Grundlage der erfassten Rotationsausrichtung des Behälters in eine vorgegebene Ausrichtung ausgerichtet wird. Die Reibvorrichtung umfasst mindestens ein individuell für jeden Behälter antreibbares Reibrad. Zur Erhöhung der Eingriffsdauer sind mindestens zwei Reibräder vorgesehen und/oder ein abplattbares Reibrad mit elastischem Rand und/oder mit elastischen Speichen ausgebildet.

Dadurch, dass eine Reibvorrichtung zur gesteuerten Ausrichtung jedes Behälters vorgesehen ist, kann jeder einzelne Behälter individuell mittels der Reibvorrichtung ausgerichtet werden. Dabei ermöglicht es die Verwendung einer Reibvorrichtung, zwar jeden Behälter individuell auszurichten, dies aber mittels einer einzigen Reibvorrichtung zu erledigen. Mit anderen Worten ist es nicht notwendig, beispielsweise an jeder Haltevorrichtung für einen Behälter, beispielsweise in Form eines Drehtellers oder einer Halsklammer, einen separaten Antrieb zur Ausrichtung der Behälter vorzusehen. Vielmehr können mittels einer Reibvorrichtung sämtliche transportierte Behälter entsprechend in der vorgegebenen Ausrichtung ausgerichtet werden. Auf diese Weise lässt sich eine zuverlässige Ausrichtung der individuellen Behälter erreichen, da die Ausrichtung für jeden einzelnen Behälter individuell erfolgt.

Weiterhin lässt sich so auch eine effiziente Ausrichtung der Behälter erreichen, dahingehend, dass zum einen lediglich eine Reibvorrichtung verwendet wird, welche stationär an einer Transportvorrichtung angeordnet sein kann. Eine Drehung der Behälter kann dann zur Ausrichtung individuell für jeden auszurichtenden Behälter aufgebracht werden. Um eine effiziente Ausrichtung unter Aufbringung eines möglichst kleinen Drehwinkels zu erreichen, kann eine Ausrichtung in Transportrotationsrichtung der Transportvorrichtung, oder entgegen der Transportrotationsrichtung durchgeführt werden.

Bevorzugt ist die Reibvorrichtung zur Herstellung eines Reibkontaktes in einem Halsbereich des jeweiligen Behälters, bevorzugt an dessen Halsring, ausgebildet. Dazu kann die Reibvorrichtung ein Reibrad umfassen, bevorzugt mit einer keilförmigen Nut und/oder mit mindestens zwei Klemmflächen zur reibschlüssigen Aufnahme eines Halsrings des Behälters, wobei das Reibrad alternativ oder zusätzlich auch eine Rändelung und/oder eine Beschichtung zur Erhöhung des Reibwertes an dem Halsbereich des Behälters aufweisen kann. Mittels dieser Ausprägung lässt sich ein zuverlässiges und effizientes Eingreifen mit dem jeweiligen Halsbereich des Behälters erreichen, mittels welchem die Ausrichtung durchgeführt werden kann. Mittels eines entsprechenden Reibrades der Reibvorrichtung können weiterhin die notwendigen Drehmomente sicher und effizient auf den jeweiligen, individuellen auszurichtenden Behälter übertragen werden und der Effizienzverlust durch Schlupf zwischen Reibrad und Behälter reduziert werden.

Die Vorrichtung umfasst auch eine Fördervorrichtung zum Transportieren der auszurichtenden Behälter, einen Transportstern, welche die Behälter an der Reibvorrichtung vorbeiführt. Die Fördervorrichtung fördert die Behälter dabei besonders bevorzugt entweder in einer Halsführung, wobei ein Eingriff in bekannter Weise am Halsring des zu fördernden Behälters durch eine Halsklammer, bevorzugt mit Spikes zur rotationsfesten Halterung, erreicht wird, oder durch entsprechende Teller, auf welchen die Behälter aufstehen. Sowohl die Halsführung als auch die Teller sind dabei bevorzugt so ausgeführt, dass eine Rotation der Behälter zumindest in dem Behandlungswinkel beziehungsweise dem Bereich des Transportweges der jeweiligen Fördervorrichtung, in welchem ein Eingriff mit der Reibvorrichtung stattfindet, problemlos durchführbar ist. Dies kann beispielsweise dadurch erfolgen, dass die Haltevorrichtung, beispielsweise der Teller, auf welchem der Behälter aufsteht, oder die entsprechende Halsklammer, in diesem Bereich des Transportweges so entriegelt oder entkoppelt wird, dass eine im Wesentlichen freie Rotation des Behälters um seine Behälterachse herum erreicht wird. Beim nachfolgenden Transport wird der Behälter dann nach Durchlaufen der Reibvorrichtung in der erreichten vorbestimmten Ausrichtung wieder bezüglich einer Drehung relativ zur Haltevorrichtung festgelegt.

Um eine entsprechende Drehbarkeit des Behälters relativ zur Haltevorrichtung zu erreichen, kann der jeweilige Behälter aus der jeweiligen Haltevorrichtung herausgehoben werden, beispielsweise durch die Reibvorrichtung selbst.

Um einen einfachen, wartungsfreundlichen und zuverlässigen Aufbau zu erreichen, ist die Reibvorrichtung bevorzugt stationär relativ zur Transportrotationsachse einer Fördervorrichtung ausgebildet.

Die Reibvorrichtung ist bevorzugt dazu ausgebildet, jeden Behälter individuell im Uhrzeigersinn, entgegen dem Uhrzeigersinn, oder überhaupt nicht zu rotieren, um die vorgegebene Ausrichtung unter Aufbringung des kleinsten Drehwinkels zu erreichen. Auf diese Weise kann der jeweils kürzeste Drehwinkel auf den Behälter aufgebracht werden, mittels welchem die entsprechende Ausrichtung stattfindet. Entsprechend kann der Behälter entweder entgegen der Transportrichtung oder mit der Transportrichtung rotiert werden, so dass eine möglichst schnelle und effiziente Ausrichtung des Behälters stattfinden kann. Der kleinste aufzubringende Drehwinkel wird vorab bestimmt, beispielsweise durch die Drehausrichtungserfassung.

Die Drehausrichtungserfassung umfasst dabei bevorzugt mindestens eine oberhalb des Behälters angeordnete Kamera. Mittels der Drehausrichtungserfassung ist es möglich, die Rotationsausrichtung eines jeden individuellen Behälters vor und/oder während des Kontakts mit der Reibvorrichtung zu erfassen und auf Grundlage der entsprechend erfassten Rotationsausrichtung die Ausrichtung des Behälters mittels der Reibvorrichtung vorzunehmen. Über die Drehausrichtungserfassung kann auch nach erfolgter Ausrichtung überprüft werden, ob der mittels der Reibvorrichtung aufgebrachte Drehwinkel das erwünschte Resultat ergeben hat. Abweichende Resultate können beispielsweise durch Schlupf der Reibvorrichtung am Behälter, ein entsprechendes Spiel zwischen Reibvorrichtung und Behälter, einen erhöhten Widerstand bezüglich der Halterung der Behälter oder einem abweichenden Behältergewicht geschuldet sein. Die Vorrichtung kann dann auf Grundlage dieser gewonnenen Werte eine entsprechende Anpassung des Ausrichtungsvorgangs vornehmen. In einer weiter bevorzugten Variante kann dies auch individualisiert für jede Haltevorrichtung innerhalb einer Transportvorrichtung, beispielsweise für jeden Arm eines Transportsternes oder jeden Teller, vorgenommen werden, um den individuellen Eigenschaften der jeweiligen Haltevorrichtung, beispielsweise des jeweiligen Armes des Transportsternes beziehungsweise des Transporttellers, Rechnung zu tragen. Dabei ist die Reibvorrichtung bevorzugt individuell für jeden auszurichtenden Behälter und für jede Haltevorrichtung einer Transportvorrichtung gemäß einem hinterlegten Parametersatz betreibbar. Erfindungsgemäß ist die Reibvorrichtung so ausgebildet, dass die Eingriffsdauer erhöht wird, durch das Vorsehen von mindestens zwei Reibrädern und/oder einem verformbaren Reibrad, beispielsweise mit einem elastischen Umfang oder elastischen Speichen, welches nicht nur einen kurzen Kontakt mit einem Bereich des auszurichtenden Behälters ermöglicht, sondern über dessen gesamten Eintauchbereich in den elastischen Umfang beziehungsweise durch die elastischen Speichen ausweichenden Bereich hinweg einen Kontakt aufrecht erhält.

Die Reibvorrichtung umfasst bevorzugt einen Servomotor, welcher einen entsprechenden Drehwinkel beziehungsweise ein entsprechendes Drehmoment auf die Reibvorrichtung individuell für jeden einzelnen vorbeigeführten Behälter aufbringt, um jeden Behälter individuell auszurichten. Die Reibvorrichtung ist weiterhin besonders bevorzugt so ausgebildet, dass sie mit jedem transportierten Behälter in Eingriff kommt. Entsprechend ist ein Zuführen beziehungsweise Entfernen der Reibvorrichtung aus dem Umfang des Behälters nicht notwendig und es kann auf diese Weise eine einfach und effizient aufzubauende Vorrichtung erreicht werden, welche zuverlässig eine Ausrichtung der jeweiligen Behälter ermöglicht.

Die oben genannte Aufgabe wird auch durch ein Verfahren mit den Merkmalen des Anspruchs 10 gelöst. Vorteilhafte Weiterbildungen ergeben sich aus den Unteransprüchen.

Entsprechend wird ein Verfahren zum Transport von Behältern in einer Getränkeabfüllanlage vorgeschlagen, bevorzugt zum Transport von nicht-rotationssymmetrisch ausgebildeten Behältern in einer der oben beschriebenen Vorrichtungen, umfassend das Ausrichten eines Behälters mittels der Reibvorrichtung, welche in Reibkontakt mit dem Behälter steht. Erfindungsgemäß wird jeder Behälter individuell in eine vorgegebene Ausrichtung ausgerichtet.

Durch diese individuelle Ausrichtung jedes Behälters mittels der Reibvorrichtung können die oben genannten Vorteile erreicht werden.

Bevorzugt wird die Drehausrichtung jedes Behälters erfasst und jeder Behälter wird auf Grundlage der erfassten Rotationsorientierung in eine vorgegebene Ausrichtung ausgerichtet. Besonders bevorzugt wird die Reibvorrichtung derart betrieben, dass der Behälter relativ zur Haltevorrichtung entweder im Uhrzeigersinn, entgegen dem Uhrzeigersinn oder überhaupt nicht um die Behälterachse herum rotiert wird, um eine vorgegebene Ausrichtung unter Aufbringung des kürzesten Drehwinkels zu erreichen. So lässt sich eine effiziente und schnelle Ausrichtung der Behälter erreichen, für welche nur ein begrenzter Drehwinkel - je nach Ausprägung der Symmetrie des Behälters - bereitgestellt werden muss.

Die Reibvorrichtung wird bevorzugt individuell für jeden auszurichtenden Behälter und/oder für jede Haltevorrichtung einer Transportvorrichtung gemäß einem hinterlegten Parametersatz betrieben und bevorzugt wird ein individueller Parametersatz für jede Behälteraufnahme einer Transportvorrichtung und/oder für jeden Behältertypen hinterlegt.

### Kurze Beschreibung der Figuren

Bevorzugte weitere Ausführungsformen und Aspekte der vorliegenden Erfindung werden durch die nachfolgende Beschreibung der Figuren näher erläutert. Dabei zeigen:
- Figur 1: eine schematische perspektivische Darstellung eines nicht-rotationssymmetrischen Behälters in Form einer einen im Wesentlichen schematischen Querschnitt aufweisenden Flasche;
- Figur 2: eine schematische Draufsicht auf zwei unterschiedliche Rotationsorientierung der Flasche aus Figur 1 bezüglich einer Führungsgarnitur;
- Figur 3: eine schematische Darstellung eines Halsbereiches eines transportierten Behälters;
- Figur 4: eine schematische Darstellung eines Reibrades einer Reibvorrichtung;
- Figur 5: eine schematische Darstellung eines Ausschnittes des Reibrades der Figur 4;
- Figur 6: eine schematische Darstellung eines weiteren Reibrades einer Reibvorrichtung mit zwei Klemmflächen in einer schematischen Darstellung;
- Figur 7: eine schematische Darstellung eines weiteren Reibrades mit elastischen Speichen;
- Figur 8: eine schematische Darstellung eines möglichen Eingriffsbereiches einer Reibvorrichtung;
- Figur 9: eine schematische Darstellung einer Vorrichtung zum Transportieren von Behältern;
- Figur 10: eine weitere schematische Darstellung einer Vorrichtung zum Transport von Behältern; und
- Figur 11: eine schematische Darstellung der aufzubringenden Drehwinkel.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen bezeichnet und auf eine wiederholte Beschreibung dieser Elemente wird in der nachfolgenden Beschreibung teilweise verzichtet, um Redundanzen zu vermeiden.

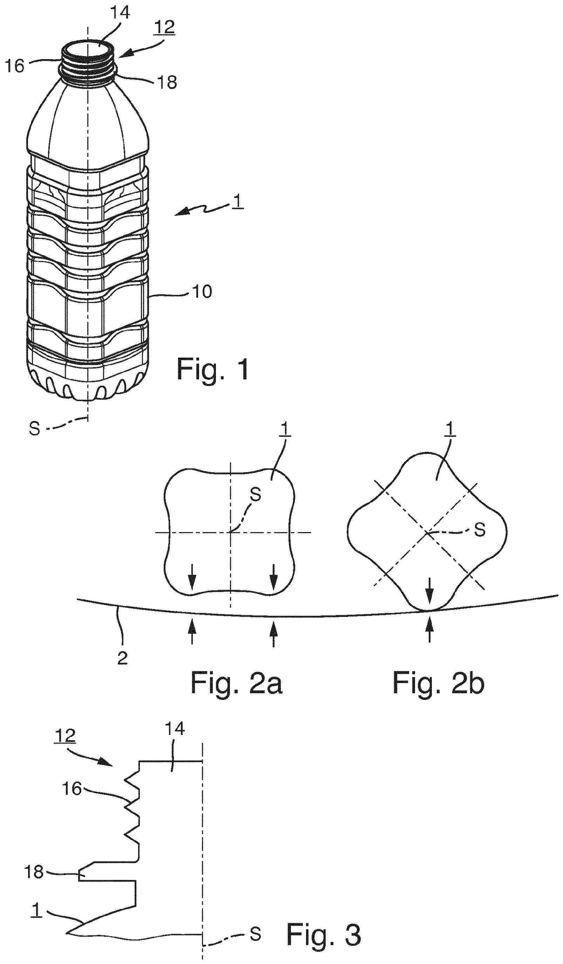

Figur 1 zeigt schematisch eine perspektivische Ansicht eines Behälters 1, welcher einen Behälterkörper 10 aufweist, der bezüglich der Behälterachse S nicht-rotationssymmetrisch ist, sondern einen senkrecht zur Behälterachse S im Wesentlichen schematischen Querschnitt aufweist. Der Behälter 1 weist weiterhin einen Halsabschnitt 12 auf, der im Wesentlichen rotationssymmetrisch zu der Behälterachse S ist, die eigentliche Mündung 14, einen Gewindebereich 16 und darunterliegend einen Halsring 18 aufweist.

Der Halsabschnitt 12 ist üblicherweise maßhaltig ausgebildet und typischerweise für eine Auswahl unterschiedlicher Behälterkörper, Behältervolumina und Behälterformen gleich ausgebildet. Dies ermöglicht es, unterschiedlich geformte Behälter mit den gleichen Führungsvorrichtungen in einer Behälterbehandlungsmaschine, beispielsweise einem Füller, zu behandeln und mit gleich ausgebildeten Behälterverschlüssen zu verschließen.

Der in Figur 1 gezeigte Behälter 1 ist eine schematisch dargestellte PET-Flasche, welche generell häufig nicht nur mit einem runden Querschnitt, sondern auch mit nicht-rotationssymmetrischen, rechteckigen, schematischen oder ovalen Querschnitten ausgeführt werden.

Behälter 1 dieser Form und insbesondere Kunststoffbehälter mit einem Halsring 18 werden in Getränkeabfüllanlagen häufig in entsprechenden Halteklammern gehalten und durch die Vorrichtung hindurch geführt. In Hochleistungsgetränkeabfüllanlagen werden Behälter 1 weiterhin häufig auf Kreisabschnittsbahnen geführt, beispielsweise beim Transport mittels Führungssternen oder beim Transport in den eigentlichen Behälterbehandlungsvorrichtungen, welche häufig als Rundläufermaschinen ausgebildet sind. Als Behälterbehandlungsvorrichtungen sind hier beispielsweise Reinigungsvorrichtungen zum Spülen und Desinfizieren von Behältern, Füller zum Befüllen der Behälter mit einem Füllprodukt, Verschließer zum Verschließen befüllter Behälter mit einem Behälterverschluss und Etikettierer zum Etikettieren der befüllten Behälter zu verstehen.

Um die am Halsring 18 beziehungsweise im Halsbereich 12 geführten Behälter 1 auf entsprechenden Kreisbahnen führen zu können, ist neben der eigentlichen Halterung im Halsbereich 12 mittels der entsprechenden Halteklammern häufig auch eine Führungsgarnitur vorgesehen, mittels welcher die Behälter 1 auf die entsprechende Kreisbahn gezwungen werden. Besonders bei befüllten Behältern 1 kommt es nämlich sonst aufgrund der Fliehkräfte zu einer Auslenkung mancher Behälter 1 beziehungsweise der Behälterkörper 10 nach außen, derart, dass die Behälter 1 dann schräg in der jeweiligen Halteklammer geführt werden und entsprechend ein genaues Aufsetzen eines Behandlungsorgans beziehungsweise das genaue Aufsetzen von Verschlüssen und insbesondere Schraubverschlüssen schwierig wird, und hier Ausschuss produziert werden kann.

Figuren 2a und 2b zeigen schematisch einen Behälter 1 in zwei unterschiedlichen Rotationsorientierungen bezüglich der Behälterachse S.

In Figur 2a ist der Behälter 1 so orientiert, dass er bezüglich einer schematisch angedeuteten Führungsgarnitur 2 von dieser, wie durch die Pfeile schematisch gezeigt, beabstandet orientiert ist. Die Seitenfläche des Behälterkörpers 10 des Behälters 1 ist entsprechend parallel zu einer Tangente der Führungsgarnitur 2 orientiert, derart, dass hier ein Abstand zwischen dem Behälter 1 und der Führungsgarnitur 2 auftritt. Beim Aufbringen der entsprechenden Zentrifugalkräfte bei einem Transport entlang einer Kreisbahn kann der Behälter 1 entsprechend nach außen ausweichen, um dann mit dieser Seitenfläche vollständig in Anlage mit der Führungsgarnitur 2 zu kommen. Hierdurch wird jedoch die Behälterachse S gegenüber der gewünschten Ausrichtung geneigt. Weiterhin kann der Behälter 1 bei diesem Prozess des Verkippens an der Führungsgarnitur anschlagen, wodurch Füllprodukt aus der Behälteröffnung herausspritzen kann und/oder Behälterverschlüsse, welche im Halsbereich aufgesetzt werden sollen, dann aufgrund der schiefen Ausrichtung der Behälterachse S auch schief aufgesetzt werden. Dies kann zur Produktion von Ausschuss führen.

In dem in Figur 2b gezeigten Beispiel ist der Behälter 1 gegenüber der in Figur 2a gezeigten Rotationsorientierung um 45° rotiert, derart, dass nun eine Ecke des Behälterkörpers 10 in Anlage mit der Führungsgarnitur 2 kommt. In dieser vorbestimmten Ausrichtung des Behälters 1 findet entsprechend eine Führung des Behälters 1 entlang der Führungsgarnitur 2 so statt, dass eine Neigung der Behälterachse S auf bei Aufbringen von Fliehkräften nicht stattfindet und der Behälter 1 entsprechend korrekt ausgerichtet ist. Die Führungsgarnitur 2 wird hier so eingestellt, dass bei der in Figur 2b gezeigten Ausrichtung des Behälters 1 die Führungsgarnitur 2 den Behälter 1 durch die jeweiligen Transportvorrichtung hindurch auch seitlich führt.

In Figur 3 ist schematisch noch einmal der Halsbereich 12 des Behälters 1 gezeigt, welcher zum einen den Gewindebereich 16 und zum anderen den Halsring 18 aufweist.

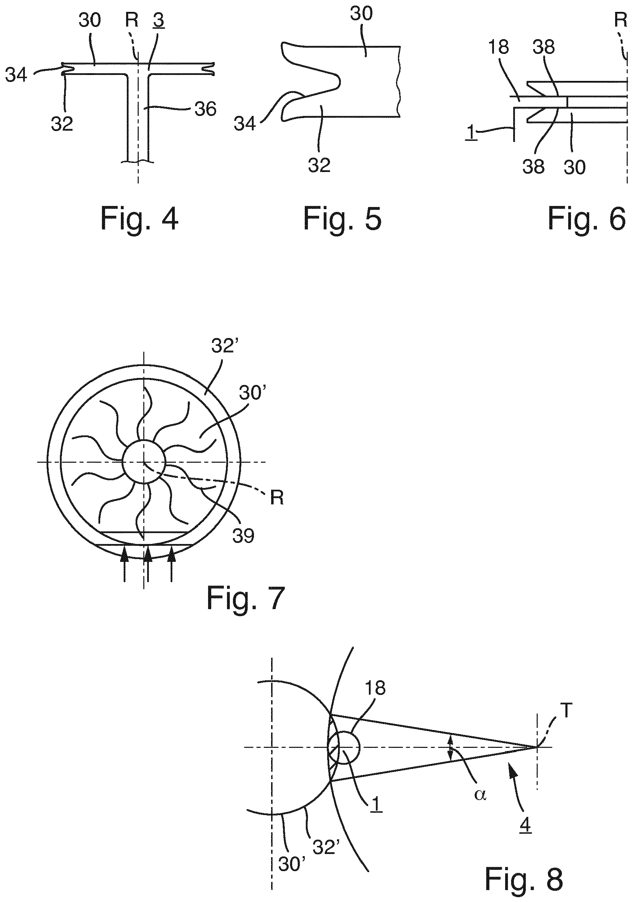

Um entsprechend eine vorbestimmte Ausrichtung aller Behälter 1 zu erreichen, ist eine Reibvorrichtung 3 vorgesehen, welche in Reibkontakt mit jedem Behälter 1 bringbar ist. Die Reibvorrichtung 3 wird beispielsweise in den Figuren 4 bis 6 schematisch in zwei unterschiedlichen Ausführungsbeispielen gezeigt. In dem ersten Ausführungsbeispiel, welches in den Figuren 4 und 5 gezeigt ist, tritt die Reibvorrichtung 3 mit dem Halsring 18 des Behälters 1 in Reibkontakt. Dazu ist die Reibvorrichtung 3 als Reibrad 30 ausgebildet, welches einen entsprechenden Randbereich 32 aufweist, der in dem in den Figuren 4 und 5 gezeigten Ausführungsbeispiel eine keilförmige Nut 34 zur Aufnahme des Halsrings 18 aufweist. Das Reibrad 30 ist um eine Rotationsachse R herum rotierbar und entsprechend an einer Rotationswelle 36 gehalten, welche mit einem nicht gezeigten Servomotor zum Aufbringen eines Drehmoments auf das Reibrad 30 verbunden ist.

Der Randbereich 32 und insbesondere die keilförmige Nut 34 ist in der Behälterbehandlungsanlage so ausgerichtet, dass er mit jedem Behälter 1, welcher vorbeitransportiert wird, am Halsring 18 des Behälters 1 in Kontakt kommt. In Figur 5 ist die keilförmige Nut 34 noch einmal schematisch in einer Ausschnittsvergrößerung des Randbereichs 32 gezeigt.

In einer Alternative ist in Figur 6 ein weiteres Reibrad 30 gezeigt, welches zwei Klemmflächen 38 aufweist, zwischen welchen der Halsring 18 des schematisch angedeuteten Behälters 1 eingeklemmt ist, derart, dass ebenfalls eine Übertragung eines Drehmomentes beziehungsweise eines Drehwinkels auf den Behälter 1 ermöglicht wird.

Um ein Eingreifen der Reibvorrichtung 3 auf den Behälter 1 und insbesondere ein möglichst langes Eingreifen des Reibrades 30 mit dem Halsring 18 des Behälters 1 zu ermöglichen, ist in Figur 7 eine schematisch Darstellung einer Weiterbildung eines Reibrades 30' gezeigt, welches einen elastischen Randbereich 32' aufweist, welcher, wie im Bereich der Pfeile angedeutet, durch den von dem Behälter 1 ausgeübten Gegendruck verformbar ist. Das Reibrad 30' weist hier den elastischen Randbereich 32', sowie elastische Speichen 39 auf, derart, dass das Reibrad 30' durch den von dem Behälter 1 erzeugten Gegendruck entsprechend verformt werden kann und damit länger in Eingriff steht.

Die Eingriffsdauer, während der das Reibrad 30' mit dem Behälter 1 in Eingriff kommt, kann durch diese elastische Ausprägung entsprechend verlängert werden, da das Reibrad 30' durch die elastische Verformung einen kurzen, quasi linearen Förderbereich ausbildet. Dies ist schematisch noch einmal in Figur 8 gezeigt, in welcher der Behälter 1 an einer Transportvorrichtung 4 und rotierend um eine Transportrotationsachse T herum geführt wird. Das Reibrad 30' taucht mit seinem elastischen Randbereich 32' entsprechend im schraffierten Bereich in das Reibrad 30' ein und stellt auf diese Weise einen Drehwinkel α der Transportvorrichtung 4 bereit, über welchen hinweg ein Eingriff des Behälters 1 und insbesondere des Halsringes 18 mit dem Reibrad 30' ermöglicht wird. Auf diese Weise lässt sich die Eingriffsdauer, während derer das Reibrad 30' mit dem Behälter in Reibkontakt steht, erhöhen, so dass die Übertragung eines Drehwinkels beziehungsweise eines Drehmomentes effizient durchgeführt werden kann.

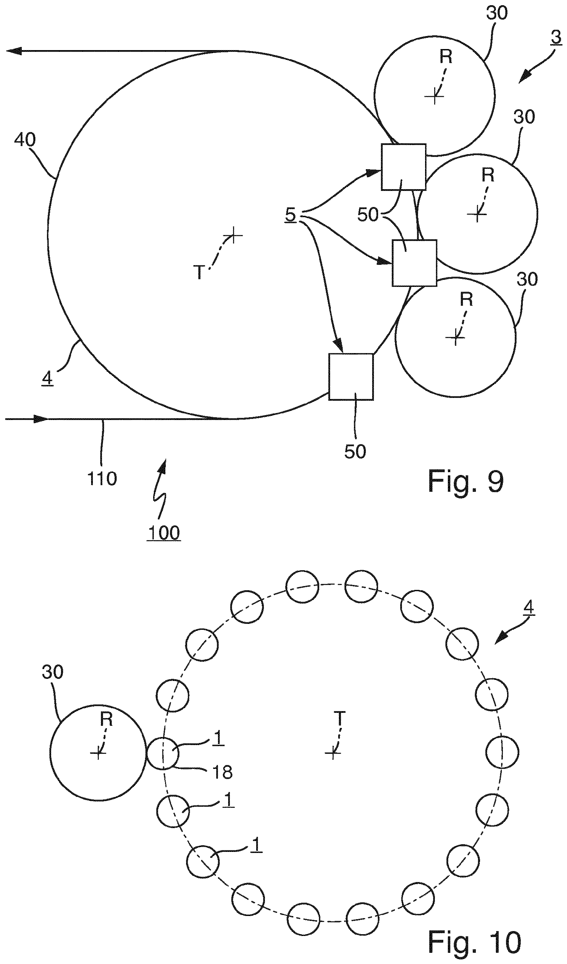

Figur 9 zeigt schematisch eine Vorrichtung 100 zum Transport von Behältern 1 entlang einer Behälterbahn 110. Eine um eine Transportrotationsachse T herum rotierbare Transportvorrichtung 4 in Form eines nur schematisch angedeuteten Transportsternes 40 ist vorgesehen, welche in bekannter Weise die Behälter 1 entlang der Transportbahn 110 transportiert. Anstelle des Transportsternes 40 kann hier auch eine Rundläuferbehälterbehandlungsvorrichtung vorgesehen sein, beispielsweise ein Rundläuferfüller, ein Rundläuferverschließer oder ein Rundläuferetikettierer.

Um die Ausrichtung von nicht-rotationssymmetrisch ausgebildeten Behältern entlang der Behälterbahn 110 steuern zu können, ist im gezeigten Ausführungsbeispiel eine Reibvorrichtung 3 vorgesehen, welche drei Reibräder 30 umfasst. Die Reibräder 30 sind entlang der Behälterbahn 110 so vorgesehen, dass jedes der Reibräder 30 mit jedem individuellen Behälter 1, welcher entlang der Behälterbahn 110 geführt wird, in Eingriff kommen. Die Reibräder 30 der Reibvorrichtung 3 sind entsprechend bezüglich ihrer jeweiligen Rotationsachsen R stationär und in einem bezüglich der Transportrotationsachse T der Transportvorrichtung 4 definierten und im Wesentlichen unveränderbaren Abstand angeordnet. Entsprechend kommt jeder Behälter, welcher entlang der Behälterbahn 110 geführt wird, in Kontakt mit allen Reibrädern 30 der Reibvorrichtung 3.

Alternativ kann ein Reibrad 30 auch so gelagert sein, dass die Rotationsachse R gefedert ist und so ausweichen kann, dass das Reibrad 30 mit einer vorgegebenen Anpresskraft an die entsprechenden Behälter angepresst wird, um auf diese Weise mechanische Toleranzen auszugleichen und einen definierten Eingriffsbereich zwischen Reibrad 30 und Behälter 1 bereitzustellen.

Die Reibräder 30 sind so ausgebildet, dass sie für jeden individuellen Behälter, welcher auf der Behälterbahn 110 geführt wird, individuell ansteuerbar sind und entsprechend jeden individuellen Behälter 1 mit einem erforderlichen Drehwinkel bezüglich der Transportvorrichtung 4 beaufschlagen können. Bei einem zufällig richtig ausgerichteten Behälter 1 kann der aufgebrachte Drehwinkel auch 0° sein.

Eine Drehausrichtungserfassung 5 ist schematisch gezeigt, in welcher individuelle Kameras 50 vorgesehen sind, welche in Transportrichtung der Behälterbahn 110 jeweils vor dem entsprechenden Reibrad 30 der Reibvorrichtung 3 angeordnet sind. Mittels der Drehausrichtungserfassung 5 und insbesondere der Kameras 50, welche besonders bevorzugt über der Behälterbahn 110 angeordnet sind, um eine Beeinflussung durch beispielsweise herabtropfendes Füllprodukt zu verhindern, kann die Rotationsorientierung eines jeden, auf der Behälterbahn 110 geführten Behälters 1 erfasst werden, und entsprechend individuell für jeden Behälter 1 die Reibvorrichtung 3 und insbesondere jedes Reibrad 30 so angesteuert werden, dass schlussendlich der benötigte Drehwinkel so aufgebracht wird, dass eine vorbestimmte Ausrichtung der Behälter 1 erreicht wird. Die Drehausrichtungserfassung 5 kommuniziert mit der Reibvorrichtung 3 so, dass jeder individuelle Behälter auf Grundlage der erfassten Rotationsorientierung in einer vorgegebenen Ausrichtung ausgerichtet wird.

Je nach Ansteuerung der Reibräder 30 kann der gesamte aufzubringende Drehwinkel gleichmäßig auf die unterschiedlichen Reibräder 30 aufgeteilt werden, so dass beispielsweise von jedem Reibrad 30 ein Drittel der notwendigen Ausrichtung durchgeführt wird. Bei mehr oder weniger Reibrädern wird der aufzubringende Drehwinkel entsprechend durch die Anzahl der vorhandenen Reibräder geteilt.

In einer weiteren bevorzugten Betriebsart wird mittels des ersten Reibrades 30 der größtmögliche Drehwinkelanteil aufgebracht, und mittels der nachfolgenden Reibräder lediglich eine Korrektur beziehungsweise Feinjustierung des Drehwinkels durchgeführt. Die Kameras 50 der Drehausrichtungserfassung 5 sind entsprechend entweder dazu vorgesehen, den vor jedem Reibrad noch erforderlichen Drehwinkel zu bestimmen und entsprechend das nachfolgende Reibrad beziehungsweise dessen Ansteuerung so anzusteuern, dass der noch erforderliche Drehwinkel möglichst durch dieses Reibrad abgearbeitet wird. Die dann nachfolgende Kamera, welche wiederum vor einem Reibrad angeordnet ist, dient dann zur Kontrolle beziehungsweise zur weiteren Feinjustierung.

Im Idealfall wird die Rotation des Reibrades 30 verlustfrei auf jeden Behälter 1 übertragen. In der Praxis findet jedoch ein Schlupf des Reibrades 30 und ein Nachlaufen des Behälters 1 aufgrund dessen Trägheit statt, welche entsprechend berücksichtigt werden müssen. Da weiterhin unterschiedliche Transportarme und Haltevorrichtungen, beispielsweise eines Transportsternes 40, unterschiedliche Eigenschaften bezüglich der Drehbarkeit der jeweiligen Behälter 1 innerhalb der Haltevorrichtungen oder leicht unterschiedliche Radien aufweisen können, kann der Reibkontakt der Behälter 1 mit den Reibrädern 30 entsprechend unterschiedlich ausfallen. Zum Ausgleich dieser Faktoren kann daher für jede Haltevorrichtung einer Transportvorrichtung 4 ein individueller Parametersatz vorgegeben sein, welcher diese Faktoren berücksichtigt und beispielsweise einen Schlupf des Reibrades 30 an dem auszurichtenden Behälter 1 ausgleicht.

In Figur 10 ist schematisch eine Transportvorrichtung 4 gezeigt, in welcher eine Vielzahl von Behältern 1 um die Transportrotationsachse T der Transportvorrichtung 4 herum transportiert werden. Schematisch ist ebenfalls ein Reibrad 30 gezeigt, welches mit dem Behälter 1 an dessen Umfang, beispielsweise am Umfang des Halsringes 18, in Eingriff kommt.

Wenn eine vorgeschaltete Drehausrichtungserfassung meldet, dass der Behälter 1 bereits in einer richtigen Ausrichtung vorliegt, so wird das Reibrad 30 bei Vorliegen eines Reibkontaktes mit dem Behälter 1 genau so angesteuert, dass das Reibrad eine Umfangsgeschwindigkeit bereitstellt, welche der Umfangsgeschwindigkeit der in der Transportvorrichtung 4 geführten Behälters entspricht. Mit anderen Worten findet dann keine Rotation des Behälters 1 statt, sondern dieser wird einfach in der bereits vorhandenen Ausrichtung weiter transportiert. Entsprechend wird in diesem Fall die Relativgeschwindigkeit zwischen Behälter 1 und Reibrad 30 am Eingriffsbereich zwischen Reibrad 30 und Behälter 1 berechnet, und entsprechend diese Geschwindigkeit durch das Reibrad aufgebracht.

Wenn die vorgeschaltete Drehausrichtungserfassung 5 hingegen meldet, dass der geringstmögliche Winkel zum Drehen des Behälters in die gewünschte Ausrichtung in einer ersten Drehrichtung liegt, so wird der aufzubringende Drehwinkel berechnet und dann entsprechend das Reibrad 30 so angesteuert, dass eine Ausrichtung des Behälters 1 im Eingriffsbereich stattfindet. Wenn mehrere Reibräder 30 hintereinander geschaltet sind, kann der aufzubringende Drehwinkel auch durch die Anzahl der Reibräder 30 geteilt werden, so dass jedem Reibrad entsprechend die Drehung um einen entsprechenden Teilwinkel zukommt.

Ergibt die vorgeschaltete Drehausrichtungserfassung, dass eine Rotation entgegen der ersten Drehrichtung um einen bestimmten Drehwinkel am schnellsten zur vorgegebenen Ausrichtung führt, wird wiederum das Reibrad 30 entsprechend angesteuert. Das Reibrad 30 kann dann entweder langsamer laufen, als im vorbeschriebenen Fall, oder gar reversiert betrieben werden, um die entsprechende Drehung des Behälters zu erreichen.

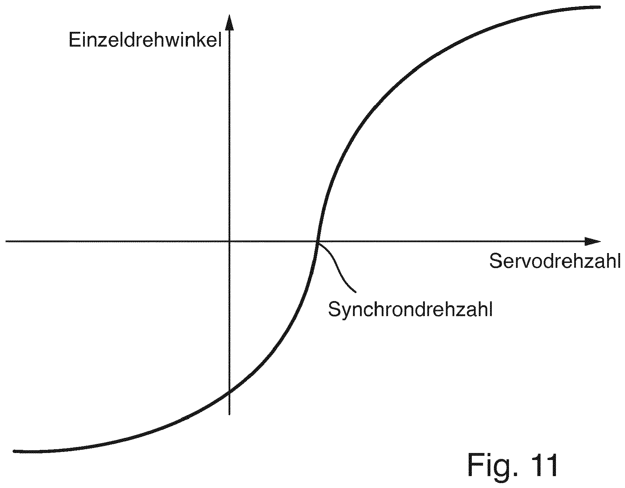

Dieser Zusammenhang wird beispielsweise in Figur 11 noch einmal gezeigt, bei der der jeweilige Einzeldrehwinkel auf der Y-Achse und die Drehzahl des Servomotors, welcher das einzelne Reibrad 30 antreibt, auf der X-Achse aufgetragen ist. Am Punkt der Synchrondrehzahl findet keine Rotation des Behälters 1 in der Transportvorrichtung 4 statt. Die Synchrondrehzahl hängt also nur von der Geometrie ab und resultiert in gleichen Umfangsgeschwindigkeiten von Reibrad und Kontaktbereich des Behälters. Bei einer Erhöhung der Servodrehzahl findet eine Drehung beispielsweise im Uhrzeigersinn, bei einer Verringerung der Drehzahl oder einem Reversieren der Drehzahl entsprechend eine Drehung beispielsweise entgegen dem Uhrzeigersinn statt.

Um hier ein schnelles Ansprechen zu ermöglichen, werden die Reibräder 30 üblicherweise mit der Synchrondrehzahl betrieben und abhängig von der Erfassung der vorausgeschalteten Drehausrichtungserfassung dann entweder abgebremst oder beschleunigt, um den jeweiligen individuellen Behälter 1 während des Transports in der Transportvorrichtung 4 in die gewünschte Ausrichtung zu rotieren.

Um für jeden Haltearm einer Transportvorrichtung 4, beispielsweise eines Transportsternes, eine möglichst korrekte Ausrichtung des mit diesem Haltearm transportierten Behälters zu ermöglichen, kann für jeden Haltearm ein eigener Parametersatz hinterlegt werden, aufgrund dessen, beispielsweise so wie in Figur 11 gezeigt, die jeweilige Servodrehzahl, welche zur Ermittlung des Einzeldrehwinkels erforderlich ist, hinterlegt ist. Weitere Faktoren, wie beispielsweise die Behältermasse, welche sich in dem Trägheitsverhalten des Behälters niederschlägt, Schlupf oder die entsprechende Leichtgängigkeit der Halterungen der Behälter für die Rotation können hier ebenfalls eingehen.

Um den vorbeschriebenen Parametersatz stets aktuell halten zu können und weiter optimieren zu können, und um auf schleichende Veränderungen im Produktionsbetrieb reagieren zu können, wird bevorzugt mittels einer nachgeschalteten Kamera die erreichte Ausrichtung kontrolliert und der Parametersatz entsprechend angepasst.

Um überhaupt eine Rotation der Behälter in der Transportvorrichtung 4 zu ermöglichen, wird eine mögliche Rotation der Behälter im Eingriffsbereich beziehungsweise in einem Winkelabschnitt, welcher den Eingriffsbereich der jeweiligen Reibvorrichtung 3 umfasst, ermöglicht. Hierzu kann eine entsprechende Drehvorrichtung bereitgestellt werden, welche geöffnet und geschlossen werden kann. Die Behälter 1 können auch vor Passieren des Reibrads beziehungsweise durch das Reibrad aus einer Halteklammer oder von einem Transportteller gehoben werden, um eine freie Rotation zu ermöglichen. In einer weiteren Ausführung sind die Behälter stets gegen einen Widerstand rotierbar, beispielsweise durch das Bereitstellen einer Reibkupplung. Entsprechend können die Behälter dann durch das Aufbringen eines entsprechenden Drehmomentes rotiert werden, verbleiben dann aber in der erreichten Ausrichtung während des weiteren Transportes durch die Anlage.

Soweit anwendbar, können alle einzelnen Merkmale, die in den einzelnen Ausführungsbeispielen dargestellt sind, miteinander kombiniert und/oder ausgetauscht werden, ohne den Bereich der Erfindung zu verlassen.

### Bezugszeichenliste

- 1: Behälter
- 10: Behälterkörper
- 12: Halsabschnitt
- 14: Mündung
- 16: Gewindebereich
- 18: Halsring
- 100: Vorrichtung zum Transport von Behältern
- 110: Behälterbahn
- 2: Führungsgarnitur
- 3: Reibvorrichtung
- 30: Reibrad
- 30': Reibrad
- 32: Randbereich
- 32': elastischer Randbereich
- 34: keilförmige Nut
- 36: Rotationswelle
- 38: Klemmfläche
- 39: elastische Speiche
- 4: Transportvorrichtung
- 40: Transportstern
- 5: Drehausrichtungserfassung
- 50: Kamera

- S: Behälterachse
- R: Rotationsachse des Reibrads
- T: Transportrotationsachse

## Patentansprüche

1. Vorrichtung (100) zum Transport von Behältern (1) in einer Getränkeabfüllanlage, bevorzugt zum Transport von nicht-rotationssymmetrisch ausgebildeten Behältern, umfassend einen Transportstern (40) als Fördervorrichtung (4) und eine Reibvorrichtung (3), die in Reibkontakt mit einem Behälter (1) bringbar ist, wobei
die Reibvorrichtung (3) zur gesteuerten Ausrichtung jedes Behälters ausgebildet ist und der Transportstern (40) die Behälter (1) an der Reibvorrichtung (3) vorbeiführt, und
eine Drehausrichtungserfassung (5) vorgesehen ist, welche zur Erfassung der Rotationsorientierung jedes Behälters (1) dient, wobei die Reibvorrichtung (3) so mit der Drehausrichtungserfassung (5) kommuniziert, dass jeder Behälter auf Grundlage der erfassten Rotationsorientierung in eine vorgegebene Ausrichtung ausrichtbar ist,
**dadurch gekennzeichnet, dass**
die Reibvorrichtung (3) mindestens ein individuell für jeden Behälter (1) antreibbares Reibrad (30) umfasst, und
zur Erhöhung der Eingriffsdauer mindestens zwei Reibräder (30) vorgesehen und/oder ein abplattbares Reibrad (30') mit elastischem Rand (32) und/oder mit elastischen Speichen (39) ausgebildet ist.

2. Vorrichtung (100) gemäß Anspruch 1, **dadurch gekennzeichnet, dass** die Reibvorrichtung (3) zur Herstellung eines Reibkontaktes in einem Halsbereich (12) des Behälters (1), bevorzugt an einem Halsring (18), ausgebildet ist.

3. Vorrichtung (100) gemäß Anspruch 2, **dadurch gekennzeichnet, dass** das Reibrad (30) mit einer keilförmigen Nut (34) und/oder mit mindestens zwei Klemmflächen (38) zur reibschlüssigen Aufnahme eines Halsrings (18) des Behälters (1) ausgebildet ist, wobei das Reibrad (30) weiterhin oder alternativ eine Rändelung und/oder eine Beschichtung zur Erhöhung des Reibwertes an dem Halsbereich (12) des Behälters (1) aufweisen kann.

4. Vorrichtung (100) gemäß einem der vorhergehenden Ansprüche, **dadurch gekennzeichnet, dass** die Fördervorrichtung (4) mindestens eine Halsklammer und/oder einen Führungsteller zum Halten des Behälters (1) aufweist.

5. Vorrichtung (100) gemäß einem der vorstehenden Ansprüche, **dadurch gekennzeichnet, dass** die Reibvorrichtung (3) stationär relativ zur Transportrotationsachse (T) der Fördervorrichtung (4) ausgebildet ist.

6. Vorrichtung (100) gemäß einem der vorstehenden Ansprüche, **dadurch gekennzeichnet, dass** die Reibvorrichtung (3) dazu ausgebildet ist, jeden Behälter (1) individuell entweder im Uhrzeigersinn, entgegen dem Uhrzeigersinn oder überhaupt nicht um die Behälterachse (S) herum zu rotieren, um eine vorgegebene Ausrichtung unter Aufbringung des kleinsten Drehwinkels zu erreichen.

7. Vorrichtung (100) gemäß einem der vorigen Ansprüche, **dadurch gekennzeichnet, dass** die Drehausrichtungserfassung mindestens eine Kamera (50) umfasst, welche bevorzugt oberhalb der zu erfassenden Behälter (1) angeordnet ist.

8. Vorrichtung (100) gemäß einem der vorstehenden Ansprüche, **dadurch gekennzeichnet, dass** das mindestens eine Reibrad (30) über einen Servomotor antreibbar ist.

9. Vorrichtung (100) gemäß einem der vorstehenden Ansprüche, **dadurch gekennzeichnet, dass** die Reibvorrichtung (3) individuell für jeden auszurichtenden Behälter (1) und für jede Haltevorrichtung der Fördervorrichtung (4) gemäß einem hinterlegten Parametersatz betreibbar ist.

10. Verfahren zum Transport von Behältern (1) in einer Getränkeabfüllanlage, bevorzugt zum Transport von nicht-rotationssymmetrisch ausgebildeten Behältern in einer Vorrichtung (100) gemäß einem der vorstehenden Ansprüche, umfassend das Ausrichten eines Behälters (1) mittels der Reibvorrichtung (3), welche in Reibkontakt mit dem Behälter (1) steht, wobei
jeder Behälter (1) individuell durch die Reibvorrichtung (3) in eine vorgegebene Ausrichtung ausgerichtet wird und die Behälter (1) mittels des Transportsterns (40) an der Reibvorrichtung (3) vorbeigeführt werden, und
eine Drehausrichtungserfassung (5) vorgesehen ist, welche zur Erfassung der Rotationsorientierung jedes Behälters (1) dient, wobei die Reibvorrichtung (3) so mit der Drehausrichtungserfassung (5) kommuniziert, dass jeder Behälter auf Grundlage der erfassten Rotationsorientierung in eine vorgegebene Ausrichtung ausgerichtet wird,
**dadurch gekennzeichnet, dass**
die Reibvorrichtung (3) mindestens ein individuell für jeden Behälter (1) angetriebenes Reibrad (30) umfasst, und
zur Erhöhung der Eingriffsdauer mindestens zwei Reibräder (30) vorgesehen und/oder ein abplattbares Reibrad (30') mit elastischem Rand (32) und/oder mit elastischen Speichen (39) ausgebildet ist.

11. Verfahren gemäß Anspruch 10, **dadurch gekennzeichnet, dass** die Rotationsorientierung jedes Behälters (1) erfasst wird und jeder Behälter (1) auf Grundlage der erfassten Rotationsorientierung in eine vorgegebene Ausrichtung ausgerichtet wird, bevorzugt durch Betrieb der Reibvorrichtung (3) derart, dass der Behälter relativ zu einer Haltevorrichtung der Fördervorrichtung (4) entweder im Uhrzeigersinn, entgegen dem Uhrzeigersinn oder überhaupt nicht um die Behälterachse (S) herum rotiert wird, um die vorgegebene Ausrichtung unter Aufbringung des kürzesten Drehwinkels zu erreichen.

12. Verfahren gemäß Anspruch 10 oder 11, **dadurch gekennzeichnet, dass** die Reibvorrichtung (3) für jede Haltevorrichtung der Fördervorrichtung (4) gemäß einem hinterlegten Parametersatz betrieben wird und bevorzugt ein individueller Parametersatz für jede Haltevorrichtung der Fördervorrichtung (4) und/oder für jeden Behältertypen hinterlegt wird.

## Claims

1. Device (100) for transporting containers (1) in a beverage dispensing machine, preferably for transporting non-rotationally symmetrical containers, comprising a transport star (40) as a conveying device (4) and a friction device (3), which can be brought into frictional contact with a container (1), wherein the friction device (3) is designed for the controlled orientation of each container and the transport star (40) moves the containers (1) past the friction device (3), and
a rotational orientation detection means (5) is provided which conduces for detecting the rotational orientation of each container (1), wherein the friction device (3) communicates with the rotational orientation detection means (5), so that each container can be oriented in a predefined orientation on the basis of the detected rotational orientation, **characterised in that** the friction device (3) comprises at least one friction wheel (30) driven individually for each container (1), and
to increase the duration of the engagement at least two friction wheels (30) are provided and/or a flattenable friction wheel (30') with an elastic edge (32) and/or with elastic spokes (39) is provided.

2. Device (100) according to claim 1, **characterised in that** the friction device (3) is designed to produce frictional contact in a neck area (12) of the container (1), preferably on a neck ring (18).

3. Device (100) according to claim 2, **characterised in that** the friction wheel (30) is designed with a wedge-like groove (34) and/or with at least two clamping faces (38) for the frictional mounting of a neck ring (18) of the container (1), wherein the friction wheel (30) can also or alternatively comprise a knurling and/or a coating to increase the friction coefficient on the neck area (12) of the container (1).

4. Device (100) according to any of the preceding claims, **characterised in that** the conveying device (4) comprises at least one neck clamp and/or a guide plate for holding the container (1).

5. Device (100) according to any of the preceding claims, **characterised in that** the friction device (3) is designed to be stationary relative to the transport rotational axis (T) of the conveying device (4).

6. Device (100) according to any of the preceding claims, **characterised in that** the friction device (3) is designed to rotate each container (1) individually either clockwise, anticlockwise or not at all about the container axis (S), in order to achieve a predefined orientation using the smallest angle of rotation.

7. Device (100) according to any of the preceding claims, **characterised in that** the rotational orientation detection means comprises at least one camera (50), which is preferably arranged above the container (1) to be detected.

8. Device (100) according to any of the preceding claims, **characterised in that** the at least one friction wheel (30) can be driven by a servomotor.

9. Device (100) according to any of the preceding claims, **characterised in that** the friction device (3) can be operated individually for each container (1) to be oriented and for each holding device of the conveying device (4) according to a saved set of parameters.

10. Method for transporting containers (1) in a beverage dispensing machine, preferably for transporting non-rotationally symmetrical containers in a device (100) according to any of the preceding claims, comprising the orientation of a container (1) by means of the friction device (3) which is in frictional contact with the container (1), wherein each container (1) is oriented individually by the friction device (3) in a predefined alignment and the containers (1) are moved past the friction device (3) by means of the transport star (40), and
a rotational orientation detection means (5) is provided which is used for detecting the rotational orientation of each container (1), wherein the friction device (3) communicates with the rotational orientation detection means (5) so that each container is oriented in a predefined orientation on the basis of the detected rotational orientation,
**characterised in that**
the friction device (3) comprises at least one friction wheel (30) driven individually for each container (1), and
to increase the duration of engagement at least two friction wheels (30) are provided and/or a flattenable friction wheel (30') is formed with an elastic edge (32) and/or with elastic spokes (39).

11. Method according to claim 10, **characterised in that** the rotational orientation of each container (1) is detected and each container (1) is oriented on the basis of the detected rotational orientation in a predefined orientation, preferably by operating the friction device (3) such that the container is rotated relative to a holding device of the conveying device (4) either clockwise, anticlockwise or not at all about the container axis (S), in order to achieve the predefined orientation using the shortest angle of rotation.

12. Method according to claim 10 or 11, **characterised in that** the friction device (3) for each holding device of the conveying device (4) is operated according to a saved set of parameters and preferably an individual set of parameters is saved for each holding device of the conveying device (4) and/or for each container type.

## Revendications

1. Dispositif (100) pour le transport de récipients (1) dans une installation de soutirage de boissons, de préférence pour le transport de récipients conçus sans symétrie de rotation, comprenant une étoile de transport (40) comme dispositif d'acheminement (4) et un dispositif à friction (3) qui peut être amené en contact à friction avec un récipient (1), dans lequel
le dispositif à friction (3) est conçu pour régler l'alignement de chaque récipient et l'étoile de transport (40) fait passer le récipient (1) devant le dispositif à friction (3), et
il est prévu un détecteur d'alignement en rotation (5), qui sert à détecter l'alignement en rotation de chaque récipient (1), dans lequel le dispositif à friction (3) communique avec la détection d'alignement en rotation (5) de sorte que chaque récipient puisse être aligné dans un alignement prédéterminé en fonction de l'orientation de rotation détectée,
**caractérisé en ce que**
le dispositif à friction (3) comprend au moins une roue de friction (30) qui peut être commandée individuellement pour chaque récipient (1), et
il est prévu pour augmenter la durée de prise au moins deux roues de friction (30) et/ou une roue de friction aplatissable (30') avec un bord élastique (32) et/ou des rayons élastiques (39).

2. Dispositif (100) selon la revendication 1, **caractérisé en ce que** le dispositif à friction (3) est conçu pour instaurer un contact de friction dans une zone de goulot (12) du récipient (1), de préférence sur une bague de goulot (18).

3. Dispositif (100) selon la revendication 2, **caractérisé en ce que** la roue de friction (30) est conçue avec une rainure cunéiforme (34) et/ou au moins deux surfaces de calage (38) pour recevoir par friction une bague de goulot (18) du récipient (1), dans lequel la roue de friction (30) peut présenter en outre ou en variante un moletage et/ou un revêtement pour augmenter la valeur de friction sur la zone de goulot (12) du récipient (1).

4. Dispositif (100) selon l'une quelconque des revendications précédentes, **caractérisé en ce que** le dispositif d'acheminement (4) présente au moins un appui de goulot et/ou un plateau de guidage pour maintenir le récipient (1).

5. Dispositif (100) selon l'une quelconque des revendications précédentes, **caractérisé en ce que** le dispositif à friction (3) est conçu de manière stationnaire par rapport à l'axe de rotation de transport (T) du dispositif d'acheminement (4).

6. Dispositif (100) selon l'une quelconque des revendications précédentes, **caractérisé en ce que** le dispositif à friction (3) est conçu pour faire tourner chaque récipient (1) individuellement dans le sens des aiguilles d'une montre, dans le sens contraire des aiguilles d'une montre ou généralement pas autour de l'axe (S) du récipient afin d'assurer un alignement prédéterminé tout en appliquant l'angle de rotation le plus petit.

7. Dispositif (100) selon l'une quelconque des revendications précédentes, **caractérisé en ce que** le détecteur d'alignement en rotation comprend au moins une caméra (50), qui est agencée de préférence au-dessus du récipient à détecter (1).

8. Dispositif (100) selon l'une quelconque des revendications précédentes, **caractérisé en ce que** la au moins une roue de friction (30) peut être commandée via un servomoteur.

9. Dispositif (100) selon l'une quelconque des revendications précédentes, **caractérisé en ce que** le dispositif de friction (3) peut être commandé individuellement pour chaque récipient à orienter (1) et pour chaque dispositif d'appui du dispositif d'acheminement (4) en fonction d'un jeu de paramètres mémorisés.

10. Procédé de transport de récipients (1) dans une installation de soutirage de boissons, de préférence pour le transport de récipients conçus sans symétrie de rotation dans un dispositif (100) selon l'une quelconque des revendications précédentes, comprenant l'alignement d'un récipient (1) au moyen du dispositif à friction (3), qui est en contact de friction avec le récipient (1), dans lequel
chaque récipient (1) est aligné individuellement par le dispositif à friction (3) dans un alignement prédéterminé et l'on fait passer les récipients (1) au moyen de l'étoile de transport (40) devant le dispositif à friction (3), et
il est prévu un détecteur d'alignement en rotation (5) qui sert à détecter l'orientation en rotation de chaque récipient (1), dans lequel le dispositif à friction (3) communique avec le détecteur d'alignement en rotation (5) de sorte que chaque récipient soit aligné dans un alignement prédéterminé en fonction de l'orientation en rotation détectée,
**caractérisé en ce que**
le dispositif à friction (3) comprend au moins une roue de friction (30) commandée individuellement pour chaque récipient (1), et
pour augmenter la durée de prise, il est prévu au moins deux roues de friction (30) et/ou une roue de friction aplatissable (30') est conçue avec un rebord élastique (32) et/ou des rayons élastiques (39).

11. Procédé selon la revendication 10, **caractérisé en ce que** l'orientation en rotation de chaque récipient (1) est détectée et chaque récipient (1) est aligné dans un alignement prédéterminé en fonction de l'orientation en rotation détectée, de préférence par commande du dispositif à friction (3) en sorte que le récipient soit soumis à une rotation par rapport à un dispositif de retenue du dispositif d'acheminement (4) dans le sens des aiguilles d'une montre, dans le sens contraire des aiguilles d'une montre ou principalement sans rotation autour de l'axe (S) du récipient, afin d'assurer l'alignement prédéterminé tout en appliquant l'angle de rotation le plus court.

12. Procédé selon la revendication 10 ou 11, **caractérisé en ce que** le dispositif à friction (3) est commandé pour chaque dispositif de retenue du dispositif d'acheminement (4) selon un jeu de paramètres enregistrés et, de préférence un jeu de paramètres individuel est enregistré pour chaque dispositif d'appui du dispositif d'acheminement (4) et/ou pour chaque type de récipient.
